# FASCICULE DE BREVET EUROPEEN

(11) **EP 3 327 999 B1**
(45) Date de publication et mention de la délivrance du brevet: **01.04.2020**
(21) Numéro de dépôt: 17203606.3
(22) Date de dépôt: 24.11.2017
(51) Int. Cl.: H04L 12/28, H04W 88/00

(54) **DISPOSITIF DE MUTUALISATION DES CONNEXIONS INTERNET**
VORRICHTUNG ZUR BÜNDELUNG VON INTERNETVERBINDUNGEN
DEVICE FOR SHARING INTERNET CONNECTIONS

(30) Priorité: 25.11.2016 FR 1661519
(43) Date de publication de la demande: 30.05.2018
(73) Titulaire: BULL SAS, 78340 Les Clayes Sous Bois (FR)
(72) Inventeur: AIELLO, Damien, 38500 LA BUISSE (FR); RADANLIEV, Martin, 38000 GRENOBLE (FR); DE LASTELLE DU PRE, Renaud, 38100 GRENOBLE (FR)
(74) Mandataire: Debay, Damien

(56) Documents cités:
- EP-A1- 2 723 135
- US-A- 6 057 668
- US-A1- 2007 030 857
- US-A1- 2011 116 444

## Description

### DOMAINE TECHNIQUE DE L'INVENTION

L'invention se rapporte au domaine des « box Internet » et plus particulièrement aux modems, commutateurs réseaux, concentrateur réseau, routeurs, permettant de créer un réseau local et une liaison Internet audit réseau local.

### ETAT DE LA TECHNIQUE ANTERIEURE

D1= US2011/0116444 divulgue un dispositif permettant à un opérateur de télécommunication de fournir aux terminaux connectés à un réseau local du dispositif un service d'accès à Internet via la mutualisation de bande passante de dispositif mobiles également connectés au dispositif, afin d'augmenter la bande passante disponible. Le dispositif comprend éventuellement un accès filaire à Internet pouvant aussi participer à la mutualisation des ressource.

D2= US 2007/030857 divulgue un routeur sans fil destiné à être en mouvement et configuré pour rechercher des points d'accès à des réseaux sans fil hôtes ayant un accès à internet et d'y établir une connexion afin d'y être le client et d'échanger des signaux avec le réseau sans fil hôte.

Le routeur permet également de créer des réseaux sans fil hôte (WLAN) pour des dispositifs mobiles clients, il est configuré pour permettre au second réseau de bénéficier de la connexion à Internet du premier réseau.

D3= EP 2723135 divulgue des méthodes pour partager une connexion internet au moyen de dispositifs déjà présents dans l'environnement typique d'une maison comme une box munie d'une connexion filaire à Interne.

Actuellement, lorsqu'un utilisateur souscrit à un abonnement à un fournisseur d'accès internet du type filaire afin de connecter son foyer à internet, la connexion internet est disponible 24h/24 7jours/7 au foyer, même lorsque les membres du foyer ne s'y trouvent pas. Ce qui fait que ladite connexion Internet est de fait non utilisée la majeure partie du temps.

En outre, dans certaines situations du fait de l'installation/configuration du réseau filaire, le débit de la connexion peut être très dégradé, rendant l'intérêt d'une telle connexion toute relative.

Or avec la multiplication des objets mobiles utilisant une connexion du type GSM, 3G, WINAX et/ou LTE, tels que, téléphone portable intelligent, tablette, ordinateur portable, un grand nombre d'utilisateurs dispose d'une connexion Internet de qualité qu'ils n'utilisent globalement que lorsqu'ils ne sont plus à leur domicile.

Il y a donc une redondance des abonnements Internet engendrant un gaspillage de ressources et une augmentation des coûts pouvant être excessifs pour un foyer.

L'une des solutions serait de se passer de connexion fixe et d'utiliser uniquement un objet mobile.

Cependant, certaines utilisations ne se prêtent pas à la consultation sur un objet mobile tel qu'un téléphone, en particulier un téléphone intelligent (« smartphone ») qui ne peut offrir un confort d'utilisation, par exemple la visualisation de vidéo en famille, le jeu en réseau, la création de documents, visualisation de tableaux, etc.

En outre, il n'existe pas de solution qui permette facilement de partager la connexion internet mobile de manière sécurisée.

Il existe donc un besoin pour un dispositif permettant de se passer d'une connexion Internet du type filaire au domicile tout en maintenant une connexion Internet lorsqu'un des membres du foyer est présent à son domicile et ceci sans manipulation compliquée de la part de l'utilisateur.

### EXPOSE DE L'INVENTION

La présente invention a donc pour objet de proposer un dispositif de mutualisation des connexions internet, permettant de palier au moins une partie des inconvénients de l'art antérieur.

A cet effet, l'invention concerne un dispositif suivant la revendication 1.

Selon une particularité, le dispositif informatique peut comprendre un module permettant de mutualiser la connexion internet, de l'objet mobile connecté au point d'accès masqué, à l'ensemble des objets connectés au dispositif informatique, pour se connecter et autoriser l'accès à une connexion internet dont l'objet mobile, connecté au point d'accès masqué, dispose.

Selon une autre particularité, le second point d'accès masqué peut être accessible simultanément à plusieurs objets mobiles disposant d'un module permettant au moins une connexion internet et configurés afin d'augmenter la bande passante du routeur et ou renforcer la connexion internet à travers un module d'agrégation de liens.

Avantageusement, le dispositif informatique peut comprendre un module permettant de définir une volumétrie maximale que peut atteindre une connexion internet particulière et un module pour que la connexion, une fois paramétrée, soit limitée à cette volumétrie.

Plus avantageusement, le module permettant de paramétrer la volumétrie maximale que peut atteindre une connexion internet particulière, peut permettre de définir une période de temps durant laquelle s'applique la volumétrie maximale

Selon une autre particularité, le dispositif informatique peut comprendre une borne de rechargement par induction des objets mobiles, en particulier pour les objets mobiles connectés au point d'accès masqué.

Selon une autre particularité, le dispositif informatique peut comprendre un module de mémoire cache configurée pour réduire les volumes téléchargés sur la connexion internet.

Selon une autre particularité, le dispositif informatique peut comprendre un module de sécurité permettant d'empêcher l'accès à la connexion internet, pour au moins une partie des objets du réseau local, connectés sur le premier point d'accès, ce module lors de son exécution par le microprocesseur permet l'affichage d'une fenêtre sur le mobile connecté au point d'accès caché, cette fenêtre listant les objets connectés constituant avec le point d'accès public un réseau local et un menu déroulant affichant les connexions ou les sites accessibles par le mobile connecté et permettant d'associer à chaque objet du réseau local, un site ou une connexion interdits.

Selon une autre particularité, le microprocesseur peut comparer une clé mémorisée dans une partie secrète de la mémoire non accessible de l'extérieur du microprocesseur avec une clé envoyée au dispositif informatique par l'objet cherchant à se connecter à un point d'accès.

Selon une autre particularité, le microprocesseur peut mémoriser dans un premier compteur le nombre d'objets connectés au point d'accès masqué et dans un autre compteur la volumétrie de données utilisées par chaque objet connecté au premier point d'accès public, puis utilise ces compteurs afin de séparer les requêtes et contrôler l'accès à la connexion internet de chaque objet connecté au premier point d'accès public, en fonction des paramètres de volumétrie préalablement enregistrés.

Par « module » on entend tout arrangement de matériel (« hardware ») et/ou logiciel (« software ») apte à mettre en œuvre une fonction particulière.

### BREVE DESCRIPTION DES FIGURES

D'autres caractéristiques, détails et avantages de l'invention ressortiront à la lecture de la description qui suit en référence à la figure annexée, qui illustre :
- La figure 1 représente un schéma d'un réseau informatique comprenant le dispositif informatique selon l'invention,
- La figure 2 représente un algorithme d'ajout et de suppression des objets mobiles connectés au second point d'accès masqué,
- La figure 3 représente un algorithme de gestion des objets mobiles en fonction de la volumétrie du flux de données,

### DESCRIPTION DETAILLEE DE DIFFERENTS MODES DE REALISATION DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

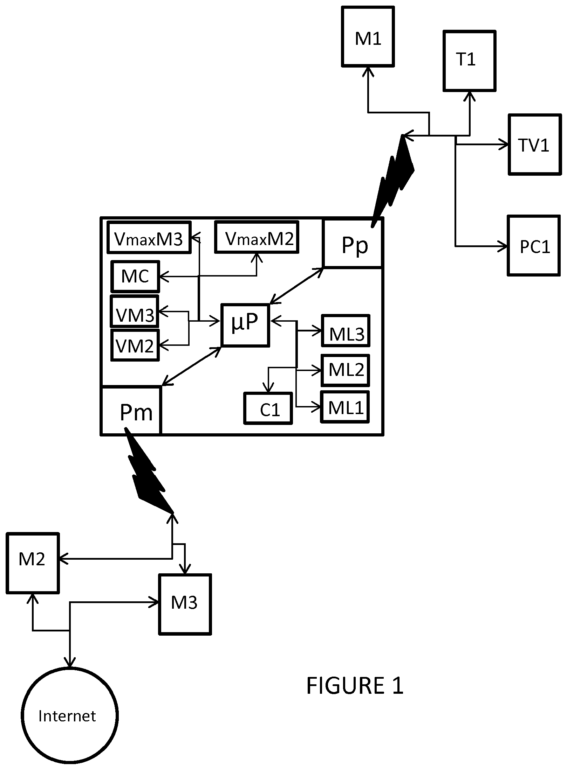

Plus particulièrement, la figure 1 illustre un mode de réalisation préféré mais non limitatif de la présente invention.

Quel que soit le mode de réalisation, la présente invention est constituée d'un dispositif informatique se présentant comme un boîtier regroupant au moins une alimentation, une carte mère munie d'un microprocesseur, une mémoire morte et une mémoire vive ainsi que des ressources réseaux.

De préférence un tel dispositif est un routeur, mais peut également être une « box Internet », un modem, un commutateur réseau ou un concentrateur réseau, ledit dispositif ne devant avoir aucune connexion Internet propre. Pour la suite de la description le mot routeur sera utilisé, mais celui-ci pourra sans aucune limitation être substitué à tout autre dispositif informatique listé dans la présente description.

Les ressources réseaux sont constituées de tous les éléments nécessaires à l'établissement d'un réseau de communication entre au moins deux objets mobiles connectés audit routeur. Par objets mobiles, on entend tous objets informatiques tels que des ordinateurs de bureau, des serveurs, des ordinateurs portables, des tablettes, des téléphones, objets intelligents et/ou connectés (caméra, alarme, station météo, centrale domotique, télévision, etc....).

Les ressources réseaux dudit routeur sont aptes à mettre en œuvre au moins deux points d'accès, de préférence accessibles par une connexion sans fil de type Wi-Fi :
- Un premier point d'accès Pp, dit public, permettant de créer un réseau local entre les différents objets mobiles (par exemple sur la figure 1, un téléphone mobile M1, une télévision TV1, une tablette T1, un ordinateur PC1) connectés au premier point d'accès,
- Un second point d'accès Pm, dit masqué, caché ou privé, complètement indépendant du premier point d'accès, permettant à au moins un objet mobile connecté à Internet (par exemple sur la figure 1, un mobile M2, un mobile M3), de partager sa connexion Internet par l'intermédiaire du routeur à l'ensemble du réseau local formé, par les objets connectés, au premier point d'accès.

Ainsi, le routeur par son microprocesseur µP contrôle le fonctionnement des points d'accès, et permet de relier les objets connectés à un point d'accès, à d'autres objets connectés à l'autre point d'accès, en répartissant les requêtes d'accès provenant de chaque objet mobile du point d'accès public Pp sur un des objets du point d'accès masqué en fonction des conditions déterminées plus bas. Il en est de même pour les réponses aux requêtes, grâce au fichier d'historique en mémorisant en même temps que l'adresse URL l'identité de l'objet mobile émettant la requête.

Par point d'accès public Pp on entend tout point d'accès diffusant son nom de réseau ou SSID (Service Set IDentifier) permettant aux objets mobiles de se connecter dessus.

Par point d'accès masqué, caché ou privé Pm, on entend tout point d'accès ne diffusant pas son SSID, ainsi pour que les objets mobiles se connectent ceux-ci doivent connaitre le SSID du point d'accès Pm. Les objets mobiles n'ayant pas été paramétrés préalablement, avec le SSID du point d'accès Pm, dans leurs paramètres de connexion, ne peuvent pas connaitre l'existence de ce point d'accès. En d'autres termes, le point d'accès masqué Pm n'est, par définition, accessible que par un objet connecté qui aura été préalablement paramétré. Ce paramétrage peut également se faire au moyen d'une clé de connexion spécifique au point d'accès masqué du routeur. Si, lors d'une requête d'accès d'un objet connecté au routeur, celui-ci reçoit la clé de connexion spécifique, le point d'accès masqué Pm effectue le jumelage sous le contrôle du microprocesseur qui compare la clé reçue, avec celle mémorisée, dans une mémoire du routeur non accessible de l'extérieur, de préférence, cette mémoire est secrète et placée à l'intérieur du microprocesseur et tout au moins une partie n'est donc pas accessible de l'extérieur du microprocesseur.

Selon le mode de réalisation choisi, les points d'accès peuvent être émis sur le même canaux Wi-Fi ou sur des canaux différents, dans le dernier cas, il est privilégier mais non obligatoire que les canaux choisi ne comprennent pas des fréquence commune, en d'autre terme qu'ils ne se chevauchent pas.

La connexion internet des objets mobiles connectés est de préférence une connexion internet par l'intermédiaire d'une technologie du type GSM, EDGE, 3G, WINAX et/ou LTE. Néanmoins lorsque cela convient, l'objet mobile peut être connecté à internet par une connexion filaire du type ADSL, RTC, CPL, câble, et/ou fibre optique.

Les points d'accès Wi-Fi peuvent être protégés par des protocoles de sécurité du type WPA, WPA2 et/ou WEP.

Selon un mode de réalisation, la connexion Wi-Fi au premier point d'accès peut être substituée ou complétée par une connexion du type Ethernet filaire, Li-Fi, radio, Bluetooth, infrarouge, et/ou communication en champs proche. Dans certains modes particuliers de réalisation, il en va de même pour la connexion Wi-Fi au second point d'accès.

Selon un mode de réalisation, lorsque plusieurs objets mobiles sont connectés simultanément au second point d'accès caché, ils bénéficient tout comme les objets mobiles connectés au premier point d'accès, de la connexion internet des autres objets mobiles connectés au second point d'accès.

Selon un mode de réalisation, le routeur comprend un module d'agrégation de liens ou « bonding » permettant de mutualiser la connexion Internet de chaque objet mobile connecté (par exemple M2, M3) au second point d'accès masqué afin d'augmenter la bande passante générale du routeur ou de renforcer une connexion Internet spécifique. La mutualisation se fait par l'agrégation de plusieurs interfaces de connexion des dispositifs connectés au point d'accès masqué (M2 et M3), en une seul, afin d'augmenter la bande passante sous l'initiative du microprocesseur au moyen de technologies standards d'agrégation de liens connues par l'homme du métier. Ainsi, un tel module permet ainsi une connexion montante (« upload ») et/ou descendante (« download ») plus rapide pour les objets mobiles connectés au routeur au point d'accès public.

Ce module d'agrégation de liens est exécuté automatiquement par le microprocesseur du routeur, dès que celui-ci détecte, sur le récepteur Wi-Fi du point d'accès masqué Pm, une demande de jumelage provenant d'un objet mobile supplémentaire au premier objet mobile M2 connecté. Le routeur comprend donc un compteur C1 qui déclenche l'exécution du programme d'agrégation dans le module, lorsque la valeur du compteur est supérieure à 1. Le compteur C1 est configuré pour comptabiliser les membres de la liste L1 correspondant aux objets mobiles connectés au point d'accès masqué Pm, ladite liste L1 étant mémorisée dans un emplacement mémoire ML1.

Aussi le module d'agrégation de lien peut également décider d'affecter la connexion spécifique d'un objet mobile connecté au point d'accès masqué Pm (par exemple, le téléphone mobile M2) aux requêtes d'accès Internet provenant d'une partie des objets connectés au point d'accès public Pp (par exemple le mobile M1 et la tablette T1), et d'affecter la connexion spécifique d'un autre objet mobile connecté au point d'accès masqué Pm (par exemple le téléphone mobile M3) à une autre partie des objets connectés au point d'accès public Pp (par exemple la télévision TV1 et l'ordinateur PC1). Pour ce faire, ce module, lors de son exécution, peut afficher une fenêtre sur les objets mobiles (M2, M3) connectés au point d'accès masqué Pm sur laquelle est énumérée une liste L3. La liste L3 répertorie les objets connectés au point d'accès public Pp, et est actualisée et mémorisée, dans un emplacement mémoire ML3, par le microprocesseur, à chaque connexion ou déconnexion d'un objet mobile du point d'accès public Pp.

A défaut de spécification par l'utilisateur sur M2 ou M3, ou de paramétrage préalable, le compteur C1 peut également servir à répartir le flux de données des objets connectés au point d'accès public Pp entre les objets connectés au point d'accès masqué Pm, en suivant une règle de proportionnalité entre les différents objets connectés au point d'accès masqué listé dans L1, en fonction du nombre d'objets connectés au point d'accès public Pp listé dans L3, ou du nombre de requêtes ou la charge du flux de données dans leur totalité.

Selon un mode de réalisation, le routeur comprend un module de mémoire cache MC. Lorsqu'un objet mobile connecté sur le premier point d'accès, consulte une page internet, le module de mémoire cache MC enregistre une copie de ladite page. Cet enregistrement, en même temps que l'historique de connexion permet au routeur de réduire les volumes téléchargés sur la connexion Internet. Ceci est réalisé au moyen d'un proxy-cache. Pour ce faire, lorsqu'un objet mobile souhaite accéder à une page Internet, le routeur vérifie d'abord si ladite page a déjà été préalablement téléchargée dans le module de mémoire cache MC lors d'une connexion antérieure en comparant l'adresse URL demandée avec la liste des adresses URL correspondant aux pages historisées dans la mémoire cache MC par le microprocesseur. Si c'est le cas, le routeur transmet à l'objet mobile, la copie mémorisée de la page, sinon, il va la chercher au travers du ou des objet(s) mobile(s) connecté(s) au second point d'accès masqué.

Un tel module de mémoire cache peut être géré par le microprocesseur et une fonction automatisée permettant de vider la mémoire selon différents critères, comme, par exemple, un critère temporel, le changement d'objets connectés au routeur, etc. Ces critères sont préprogrammés dans le routeur et ou gérables par un objet connecté au point d'accès masqué. Cette fonction automatisée est exécutée, par le microprocesseur du routeur, lors de la détection d'un nouvel objet connecté, ou son changement, ou après un comptage correspondant à un critère temporel.

Selon un mode de réalisation, le routeur comprend un module permettant de définir, par paramétrage effectué par l'utilisateur d'un objet connecté au point d'accès masqué, une volumétrie maximale mémorisée que peut atteindre une connexion Internet particulière et un module pour mesurer la volumétrie de la connexion, afin de limiter la connexion à cette volumétrie. Ainsi, le routeur peut permettre une fois que la volumétrie maximale paramétrée pour une connexion est atteinte, de rediriger les données vers une autre connexion internet sortante. Cette fonctionnalité permet de préserver le forfait de l'objet mobile connecté au second point d'accès.

En outre, le routeur peut être préprogrammé pour équilibrer les flux entre les différentes connexions Internet, des objets mobiles connectés au second point d'accès masqué, en faisant en sorte de réaliser éventuellement une autre condition, par exemple une limite fixée à ne pas dépasser sur chaque objet, ou à atteindre (dans la mesure du possible), en même temps. Ainsi, par ce module de commande, le microprocesseur établit les liaisons entre les objets connectés au point d'accès public et les objets connectés au point d'accès masqué de façon à respecter la condition.

Selon un mode de réalisation, le routeur comprend un module de sécurité permettant d'empêcher l'accès à la connexion Internet, pour au moins une partie des objets du réseau local connectés sur le premier point d'accès. Ce module, lors de son exécution, peut afficher une fenêtre sur l'objet mobile (par exemple le téléphone mobile M2 ou M3 de la figure 1) connecté au point d'accès caché. Cette fenêtre énumère une liste L3 des objets mobiles du réseau local et un menu déroulant affiche les connexions ou les sites accessibles par les objets mobiles de la liste L3. Cette fenêtre permet d'associer, à chaque objet mobile du réseau local listé dans la liste L3 en le sélectionnant sur l'objet mobile connecté au point d'accès caché (M2), un site ou une connexion pour le/la qualifier d'interdit(e). Ainsi, chaque objet mobile connecté au point d'accès masqué peut par exemple exercer un contrôle parental.

Selon un mode de réalisation, le routeur peut comprendre un module d'automatisation d'ajout et de suppression d'objet mobile connecté au second point d'accès Pm, lorsque ceux-ci ont été préalablement paramétrés pour se connecter au second point d'accès masqué Pm. Avec un tel module d'automatisation, le partage de connexion est fiabilisé et fluidifié car, l'utilisateur d'un objet mobile ayant une connexion internet n'a pas à interagir avec le routeur afin de partager sa connexion internet avec le réseau local.

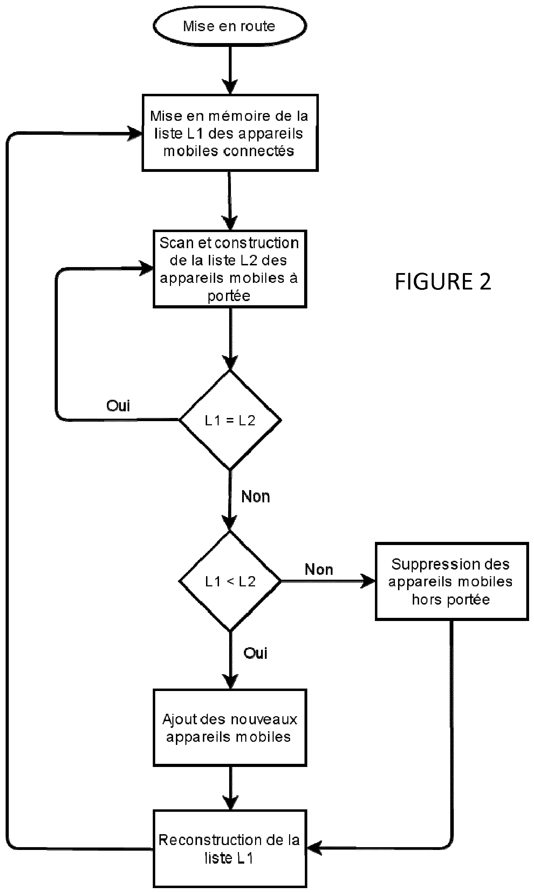

Pour ce faire, un tel module permet au microprocesseur d'exécuter un algorithme illustré par la figure 2, consistant à enregistrer en mémoire ML1, la liste L1 des objets mobiles, connectés au point d'accès masqué Pm, partageant leur connexion Internet, puis le microprocesseur scanne et constitue en mémoire ML2, une liste L2 des objets mobiles à portée qui sont susceptibles de partager leur connexion, c'est-à-dire qu'ils ont été préalablement paramétrés pour partager leur connexion Internet. Le microprocesseur compare les listes L1 et L2 mémorisées en mémoire ML1 et ML2 :
- Si les listes sont identiques, le microprocesseur mémorise et constitue la liste L2 en tant que liste L1 en mémoire ML1 en vue d'une nouvelle comparaison,
- Si les listes sont différentes, le microprocesseur compare si la liste L1 est inférieure ou non à la liste L2 :
   ∘ Si L2 est supérieure à L1, alors le processeur ajoute les nouveaux objets mobiles à la liste L1, et enregistre en mémoire la nouvelle liste L1 en mémoire ML1 en vue de la comparer à nouveau à une liste L2,
   ∘ Si L2 est inférieure à L1, alors le processeur supprime les objets mobiles hors de portée dans la liste L1, et enregistre en mémoire la nouvelle liste L1 en mémoire ML1 en vue de la comparer à nouveau à la liste L2.
Avec un tel module d'automatisation, le partage de connexion est fiabilisé et fluidifié car, l'utilisateur n'a pas à interagir avec le routeur afin de partager sa connexion au réseau local.

Selon un mode de réalisation, le routeur comprend une borne de rechargement des objets mobiles, afin de maintenir chargée la batterie de tels objets et éviter ainsi la perte de connexion. De préférence, une telle borne de rechargement utilise l'induction évitant ainsi l'utilisation de câbles.

### Exemple de réalisation

La figure 1 illustre un mode de réalisation d'un réseau informatique comprenant un routeur selon l'invention. Ledit routeur se présente sous la forme d'un boitier comprenant une alimentation, une carte-mère munie d'un microprocesseur µP, un bloc mémoire comprenant une mémoire morte et une mémoire vive ainsi que des ressources réseaux mettant en œuvre sous contrôle du microprocesseur deux points d'accès : un premier point d'accès public Pp et un second point d'accès masqué Pm.

Un téléphone mobile M1, une télévision TV1, une tablette T1 et un ordinateur PC1 sont connectés sur le point d'accès public Pp, sous le contrôle du microprocesseur µP et forment un réseau local dépourvu de connexion Internet. Afin de se connecter, le téléphone mobile M1, la télévision TV1, la tablette T1 et l'ordinateur PC1 ont chacun émis une requête de connexion au point d'accès public, accompagné d'une clé de connexion. Après avoir comparé et accepté la clé de connexion en fonction des paramètres de connexion enregistrés dans le bloc mémoire, le microprocesseur autorise le point d'accès public à établir une connexion entre les différents objets mobile connectés au point d'accès public pour réaliser *in fine* un réseau local.

Un téléphone mobile M2 et un téléphone mobile M3, chacun ayant une connexion Internet, sont connectés sur le point d'accès masqué Pm, sous le contrôle du microprocesseur µP. Afin de se connecter, les téléphones mobiles M2 et M3 ont effectué une recherche du point d'accès masqué en émettant une requête (préalablement paramétrée par l'utilisateur) comprenant une clé de connexion mais également le nom de réseau ou SSID du point d'accès masqué Pm. Après avoir comparé et accepté la clé de connexion en fonction des paramètres de connexion enregistrés dans le bloc mémoire, le microprocesseur autorise le point d'accès masqué Pm à établir une connexion avec le point d'accès public et à travers ce dernier avec une sélection (par exemple M1, TV1) des objets mobiles connectés au point d'accès public Pp pour les connecter au réseau internet par les téléphones mobiles M2 et/ou M3.

Le routeur par son microprocesseur contrôle le fonctionnement des points d'accès Pp et Pm, et permet de relier selon les besoins ou paramétrages le téléphone mobile M1,ou la télévision TV1,ou la tablette T1 ou l'ordinateur PC1 ou une sélection , ou l'ensemble des objets connectés sur le point d'accès public Pp, aux téléphones mobiles M2 et/ou M3 connectés au point d'accès masqué Pm. Ainsi, le téléphone mobile M1, la télévision TV1, la tablette T1 et l'ordinateur PC1 peuvent utiliser la connexion Internet des téléphones mobiles M2 et/ou M3.

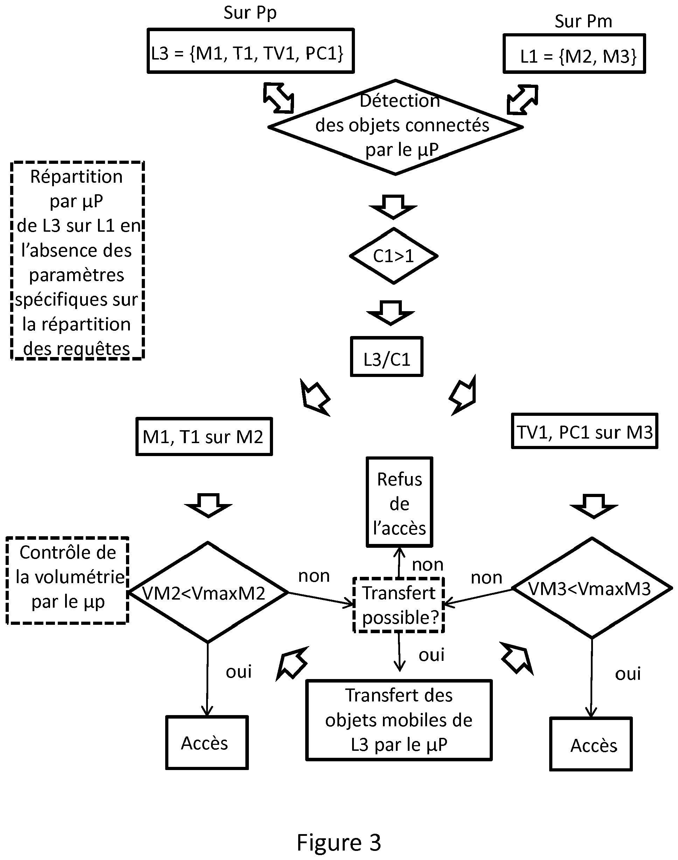

Ce contrôle peut se faire en fonction de différents paramètres qui permettent, de répartir les requêtes d'accès provenant de chaque objet mobile du point d'accès public Pp sur un des objets du point d'accès masqué. Un exemple est illustré par la figure 3 dans laquelle, le microprocesseur enregistre dans le bloc mémoire :
- Une liste L1 dans un emplacement mémoire ML1, correspondant à la liste des objets mobiles connectés au point d'accès masqué Pm : L1 = {M2, M3},
- Une liste L3 dans un emplacement mémoire ML3, correspondant à la liste des objets mobiles connectés au point d'accès public Pp : L3 = {M1, TV1, T1, PC1},
- Un compteur C1 qui est configuré pour comptabiliser sous contrôle du microprocesseur, les membres de la liste L1 : C1 = 2,
- Un compteur VM2 de la volumétrie des données passant par M2, sous contrôle du microprocesseur,
- Une valeur limite VmaxM2 maximale de la volumétrie de données autorisées passant par M2,
- Un compteur VM3 de la volumétrie des données passant par M3, sous contrôle du microprocesseur,
- Une valeur limite VmaxM3 maximale de la volumétrie de données autorisées passant par M3

En l'absence d'instruction spécifique d'un utilisateur d'un élément de la liste L1, le microprocesseur compare la liste L3 avec la valeur du compteur C1, et répartie de manière proportionnelle les éléments la liste L3 sur les éléments de la liste L1, par exemple sur la figure 3 : le microprocesseur répartit les requêtes d'accès M1 et T1 sur M2 et celles de TV1 et PC1 sur M3.

Le microprocesseur µP vérifie en permanence la valeur enregistrée en mémoire du compteur de volumétrie VM2 et VM3 des données passant par les éléments de la liste L1 et la compare avec les valeurs maximales autorisées VmaxM2 et VmaxM3, par exemple sur la figure 3 le microprocesseur va chercher la valeur limite VmaxM2 et la compare avec la valeur du compteur VM2, si VM2 < VmaxM2 alors le microprocesseur autorise l'accès de M1 et/ou T1 à la connexion Internet de M2. Dans le cas contraire, le microprocesseur refuse la requête d'accès et peut rediriger celle-ci vers un autre membre de la liste L1, par exemple dans la figure 3 M3. Cette redirection est possible seulement dans le cas où la valeur limite VmaxM3 n'a pas été atteinte. Dans le cas contraire, si aucun membre de la liste L1 n'est disponible, le microprocesseur rejet la requête d'accès et informe l'utilisateur de M1 et/ ou T1 par l'intermédiaire d'une fenêtre d'affichage qu'aucune connexion n'est disponible.

On comprendra aisément à la lecture de la présente demande que les particularités de la présente invention, comme généralement décrites et illustrées dans les figures, peuvent être arrangées et conçues selon une grande variété de configurations différentes. Ainsi, la description de la présente invention et les figures afférentes ne sont pas prévues pour limiter la portée de l'invention mais représentent simplement des modes de réalisation choisis.

L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

## Revendications

1. Dispositif informatique sans connexion au réseau internet, comprenant un boîtier regroupant au moins :
• une alimentation,
• une carte-mère munie d'un microprocesseur,
• une mémoire morte et une mémoire vive ainsi que
• des ressources réseaux comprenant au moins un premier point d'accès public diffusant son identifiant de réseau et permettant la création d'un réseau local entre différents objets mobiles connectables au dispositif informatique par ce premier point d'accès public, **caractérisé en ce que** les ressources réseaux comprennent un second point d'accès, masqué, ne diffusant pas son identifiant de réseau, complètement indépendant du premier point d'accès, permettant de connecter sans fil au moins un objet mobile disposant d'un module permettant au moins une connexion internet, l'objet mobile étant configuré pour se connecter au point d'accès masqué, afin de permettre le partage de la connexion internet sous le contrôle du microprocesseur, à travers le point d'accès masqué du dispositif informatique vers les différents objets mobiles du réseau local, connectés au premier point d'accès public.

2. Dispositif informatique selon la revendication 1, **caractérisé en ce qu'**il comprend un module permettant de mutualiser la connexion internet, de l'objet mobile connecté au point d'accès masqué, à l'ensemble des objets connectés au dispositif informatique, pour se connecter et autoriser l'accès à une connexion internet dont l'objet mobile, connecté au point d'accès masqué, dispose.

3. Dispositif informatique selon la revendication 1 ou 2, **caractérisé en ce que** le second point d'accès masqué est accessible simultanément à plusieurs objets mobiles disposant d'un module permettant au moins une connexion internet et configurés afin d'augmenter la bande passante du routeur et ou renforcer la connexion internet à travers un module d'agrégation de liens.

4. Dispositif informatique selon l'une des revendications 1 à 3, **caractérisé en ce qu'**il comprend un module permettant de définir une volumétrie de données maximale que peut atteindre une connexion internet particulière et un module pour que la connexion, une fois paramétrée, soit limitée à cette volumétrie.

5. Dispositif informatique selon la revendication 4, **caractérisé en ce que** le module permettant de paramétrer la volumétrie de données maximale que peut atteindre une connexion internet particulière, permet de définir une période de temps durant laquelle s'applique la volumétrie maximale.

6. Dispositif informatique selon l'une des revendications 1 à 5, **caractérisé en ce qu'**il comprend une borne de rechargement par induction des objets mobiles, en particulier pour les objets mobiles connectés au point d'accès masqué.

7. Dispositif informatique selon l'une des revendications 1 à 6, caractérisé en qu'il comprend un module de mémoire cache configurée pour réduire les volumes téléchargés sur la connexion internet.

8. Dispositif informatique selon l'une des revendications 1 à 7, **caractérisé en ce qu'**il comprend un module de sécurité permettant d'empêcher l'accès à la connexion internet, pour au moins une partie des objets du réseau local, connectés sur le premier point d'accès, ce module lors de son exécution par le microprocesseur permet l'affichage d'une fenêtre sur le mobile connecté au point d'accès masqué, cette fenêtre listant les objets connectés constituant avec le point d'accès public un réseau local et un menu déroulant affichant les connexions ou les sites accessibles par le mobile connecté et permettant d'associer à chaque objet du réseau local, un site ou une connexion interdits.

9. Dispositif informatique selon l'une des revendications 1 à 8, **caractérisé en ce que** le microprocesseur compare une clé mémorisée dans une partie secrète de la mémoire non accessible de l'extérieur du microprocesseur avec une clé envoyée au dispositif informatique par l'objet cherchant à se connecter à un point d'accès.

10. Dispositif informatique selon l'une des revendications 4 à 9 dépendant de la revendication 3, **caractérisé en ce que** le microprocesseur mémorise dans un premier compteur le nombre d'objets connectés au point d'accès masqué et dans un autre compteur la volumétrie de données utilisées par chaque objet connecté au premier point d'accès public, puis utilise ces compteurs afin de séparer les requêtes et contrôler l'accès à la connexion internet de chaque objet connecté au premier point d'accès public, en fonction des paramètres de volumétrie préalablement enregistrés.

## Patentansprüche

1. Computergerät ohne Verbindung zum Internet, das ein Gehäuse umfasst, das wenigstens Folgendes beinhaltet:
• eine Stromversorgung,
• eine mit einem Mikroprozessor ausgestattete Mutterplatine,
• einen Festwertspeicher und einen Direktzugriffsspeicher sowie
• Netzwerkressourcen, die wenigstens einen ersten öffentlichen Zugangspunkt umfassen, der seine Netzwerkkennung aussendet und die Erzeugung eines lokalen Netzwerks zwischen verschiedenen mobilen Objekten zulässt, die über diesen ersten öffentlichen Zugangspunkt mit dem Computergerät verbunden werden können,
**dadurch gekennzeichnet, dass** die Netzwerkressourcen einen verborgenen zweiten Zugangspunkt umfassen, der seine Netzwerkkennung nicht aussendet, völlig unabhängig vom ersten Zugangspunkt, der eine drahtlose Verbindung wenigstens eines mobilen Objekts zulässt, das ein Modul aufweist, das wenigstens eine Internetverbindung zulässt, wobei das mobile Objekt zum Verbinden mit dem verborgenen Zugangspunkt konfiguriert ist, um die gemeinsame Nutzung der Internetverbindung unter der Kontrolle des Mikroprozessors durch den verborgenen Zugangspunkt des Computergeräts zu den verschiedenen mobilen Objekten des lokalen Netzwerks zuzulassen, die mit dem ersten öffentlichen Zugangspunkt verbunden sind.

2. Computergerät nach Anspruch 1, **dadurch gekennzeichnet, dass** es ein Modul umfasst, das die Mutualisierung der Internetverbindung des mit dem verborgenen Zugangspunkt verbundenen mobilen Objekts mit der Gruppe von mit dem Computergerät verbundenen Objekten zulässt, um sich zuzuschalten und den Zugriff auf eine Internetverbindung zu autorisieren, über die das mit dem verborgenen Zugangspunkt verbundene mobile Objekt verfügt.

3. Computergerät nach Anspruch 1 oder 2, **dadurch gekennzeichnet, dass** der verborgene zweite Zugangspunkt gleichzeitig für mehrere mobile Objekte zugänglich ist, die ein Modul haben, das wenigstens eine Internetverbindung zulässt, und konfiguriert zum Vergrößern des Passbands des Routers und zum Verstärken der Internetverbindung durch ein Verbindungsaggregationsmodul.

4. Computergerät nach einem der Ansprüche 1 bis 3, **dadurch gekennzeichnet, dass** es ein Modul umfasst, das die Definition eines maximalen Datenvolumens zulässt, das eine bestimmte Internetverbindung erreichen kann und ein Modul, damit die Verbindung nach dem Parametrisieren auf dieses Volumen begrenzt wird.

5. Computergerät nach Anspruch 4, **dadurch gekennzeichnet, dass** das Modul, das das Parametrisieren des maximalen Datenvolumens zulässt, das eine bestimmte Internetverbindung erreichen kann, die Definition einer Zeitperiode zulässt, für die das maximale Volumen gilt.

6. Computergerät nach einem der Ansprüche 1 bis 5, **dadurch gekennzeichnet, dass** es einen Anschluss zum induktiven Aufladen von mobilen Objekten umfasst, insbesondere für die mit dem verborgenen Zugangspunkt verbundenen mobilen Objekte.

7. Computergerät nach einem der Ansprüche 1 bis 6, **dadurch gekennzeichnet, dass** es ein Cache-Speichermodul umfasst, konfiguriert zum Reduzieren der auf der Internetverbindung ferngeladenen Volumen.

8. Computergerät nach einem der Ansprüche 1 bis 7, **dadurch gekennzeichnet, dass** es ein Sicherheitsmodul umfasst, das es zulässt, den Zugriff auf die Internetverbindung für wenigstens einen Teil der Objekte des lokalen Netzwerks zu sperren, die mit dem ersten Zugangspunkt verbunden sind, wobei dieses Modul bei seiner Ausführung durch den Mikroprozessor die Anzeige eines Fensters auf dem mit dem verborgenen Zugangspunkt verbundenen mobilen Objekt zulässt, wobei dieses Fenster die angeschlossenen Objekte aufführt, die mit dem öffentlichen Zugangspunkt ein lokales Netzwerk bilden, und ein Dropdown-Menü, das die Verbindungen oder die für das angeschlossene mobile Gerät zugänglichen Seiten anzeigt und eine Assoziation einer verbotenen Seite oder Verbindung mit jedem Objekt des lokalen Netzwerks zulässt.

9. Computergerät nach einem der Ansprüche 1 bis 8, **dadurch gekennzeichnet, dass** der Mikroprozessor einen in einem geheimen Teil des von außerhalb des Prozessors nicht zugänglichen Speichers mit einem Schlüssel vergleicht, der von dem Objekt, das sich an einen Zugangspunkt anschließen will, zum Computergerät gesendet wird.

10. Computergerät nach einem der Ansprüche 4 bis 9 in Abhängigkeit von Anspruch 3, **dadurch gekennzeichnet, dass** der Mikroprozessor in einem ersten Zähler die Anzahl von mit dem verborgenen Zugangspunkt verbundenen Objekten speichert und in einem anderen Zähler das von jedem mit dem ersten öffentlichen Zugangspunkt verbundenen Objekt benutzte Datenvolumen speichert, dann diese Zähler benutzt, um die Anforderungen zu trennen und den Zugang zu der Internetverbindung jedes am ersten öffentlichen Zugangspunkt angeschlossenen Objekts zu kontrollieren, in Abhängigkeit von zuvor registrierten Volumenparametern.

## Claims

1. Computer apparatus that is not connected to the Internet and comprises a housing combining at least:
• a power supply,
• a motherboard provided with a microprocessor,
• a read-only memory and a random-access memory, and also
• network resources comprising at least one first, public access point, which broadcasts its network identifier and allows a local network to be created between various mobile devices that can be connected to the computer apparatus by this first, public access point,
**characterized in that** the network resources comprise a second, hidden access point, which does not broadcast its network identifier, is completely independent of the first access point, and allows the wireless connection of at least one mobile device that has a module allowing at least one Internet connection, the mobile device being configured to connect to the hidden access point, in order to allow the Internet connection to be shared, under the control of the microprocessor, via the hidden access point of the computer apparatus, with the various mobile devices of the local network that are connected to the first, public access point.

2. Computer apparatus according to Claim 1, **characterized in that** it comprises a module allowing the Internet connection to be pooled between the mobile device connected to the hidden access point and all the devices connected to the computer apparatus in order to connect and permit access to an Internet connection available to the mobile device connected to the hidden access point.

3. Computer apparatus according to Claim 1 or 2, **characterized in that** the second, hidden access point can be accessed simultaneously by a plurality of mobile devices that have a module allowing at least one Internet connection and are configured so as to increase the bandwidth of the router and/or strengthen the Internet connection via a link aggregation module.

4. Computer apparatus according to one of Claims 1 to 3, **characterized in that** it comprises a module that allows a maximum volume of data that a particular Internet connection can reach to be defined, and a module for ensuring that, once the parameters of the connection have been set, the connection is limited to this volume.

5. Computer apparatus according to Claim 4, **characterized in that** the module that allows the maximum volume of data that a particular Internet connection can reach to be set allows a period of time during which the maximum volume applies to be defined.

6. Computer apparatus according to one of Claims 1 to 5, **characterized in that** it comprises an inductive charging station for charging the mobile devices, in particular for the mobile devices connected to the hidden access point.

7. Computer apparatus according to one of Claims 1 to 6, **characterized in that** it comprises a cache memory module, the cache memory being configured to reduce the volumes downloaded over the Internet connection.

8. Computer apparatus according to one of Claims 1 to 7, **characterized in that** it comprises a security module that allows access to the Internet connection to be prevented for at least some of the devices of the local network that are connected to the first access point, which module, when it is executed by the microprocessor, allows a window to be displayed on the mobile connected to the hidden access point, which window provides a list of the connected devices that, together with the public access point, form a local network, and a drop-down menu that displays the connections or sites accessible to the connected mobile and allows a prohibited site or a prohibited connection to be associated with each device of the local network.

9. Computer apparatus according to one of Claims 1 to 8, **characterized in that** the microprocessor compares a key stored in a secret part of the memory that cannot be accessed from outside the microprocessor with a key sent to the computer apparatus by the device seeking to connect to an access point.

10. Computer apparatus according to one of Claims 4 to 9 when said claims are dependent on Claim 3, **characterized in that** the microprocessor stores, in a first counter, the number of devices connected to the hidden access point and, in another counter, the volume of data used by each device connected to the first, public access point, and then uses these counters to separate the requests and control the access to the Internet connection of each device connected to the first, public access point on the basis of the previously recorded volume parameters.
